# EUROPEAN PATENT SPECIFICATION

(11) **EP 2 629 605 B1**
(45) Date of publication and mention of the grant of the patent: **28.12.2016**
(21) Application number: 11772982.2
(22) Date of filing: 21.10.2011
(51) Int. Cl.: A01N 25/02, A01N 25/04, A01N 25/30, A01N 45/02, A01N 43/56

(54) **AGROCHEMICAL CONCENTRATES COMPRISING ALKOXYLATED ADJUVANTS**
AGROCHEMISCHE KONZENTRATE MIT ALKOXYLIERTEN HILFSSTOFFEN
CONCENTRÉS AGROCHIMIQUES CONTENANT DES ADJUVANTS ALCOXYLÉS

(30) Priority: 21.10.2010 EP 10188308; 21.10.2010 EP 10188306
(43) Date of publication of application: 28.08.2013
(73) Proprietor: Syngenta Limited, Guildford, Surrey GU2 7YH (GB)
(72) Inventor: RAMSAY, Julia, Lynne, Bracknell Berkshire RG426EY (GB); HONE, John, Bracknell Berkshire RG426EY (GB); CALVO, Jose, Luis, Bracknell Berkshire RG426EY (GB); THOMSON, Niall, Rae, Bracknell Berkshire RG426EY (GB); MULQUEEN, Patrick, Joseph, Bracknell Berkshire RG42 6EY (GB); BASSETT-CROSS, Alexander, Bracknell Berkshire RG426EY (GB); FITZJOHN, Steven, Bracknell Berkshire RG426EY (GB); HARRIS, Antony, Bracknell Berkshire RG426EY (GB)
(74) Representative: Syngenta International AG
(86) International application number: PCT/EP2011/068435
(87) International publication number: WO 2012/052545

(56) References cited:
- WO-A1-99/09822
- WO-A1-2005/013692
- WO-A2-2007/033764

## Description

The present invention relates to aqueous agrochemical concentrates, as well as methods of making and using the aqueous agrochemical concentrates.

Bioactive agrochemicals are usually sold as concentrated formulations and prior to use they are diluted with water and subsequently applied to plants, e.g. by spraying. Such formulations may include ingredients in addition to the agrochemical active ingredient to improve the product, e.g. to assist with dispersion of the active in water, to improve plant up-take of the active, to improve the bioactivity of the active, or to improve shelf-life etc..

There are a number of different types of formulation that are commonly used with bioactive agrochemicals. These include soluble concentrates (SL), emulsifiable concentrates (EC), suspension concentrates (SC), oil-in-water emulsions (EW), water-dispersible powders (WP), water-dispersible granules (WG), suspoemulsions (SE) and microcapsule suspensions (CS).

Some types of formulation, particularly formulations other than emulsifiable concentrates, benefit greatly from the presence of an adjuvant, i.e. an agent used to enhance the bioperformance (activity) of the bioactive agrochemical. Adjuvants can vary in complexity from simple surfactants to multi-component blended oils. Some adjuvants, such as alcohol ethoxylates, display liquid crystalline behaviour at high concentrations in water (WO 2005/013692). It can be difficult to formulate agrochemical concentrates containing such adjuvants at high concentrations due to the high viscosity of the liquid crystalline phases. The liquid crystalline phases can be cubic, hexagonal or lamellar phases, with different phases forming at different concentrations and different temperatures. The cubic and hexagonal phases are highly viscous, the lamellar phase is less viscous but we have found that this is still viscous enough to give problems with pourability, rinsability from the container and/or dilution into water for spray application.

WO 2005/013692 describes use of hydrotropes to address the problem of adjuvants exhibiting liquid crystalline behaviour. Hydrotropes are generally considered to be molecules that solubilise hydrophobic compounds in water. Typically, hydrotropes are amphiphiles and consist of a hydrophilic part and a small hydrophobic part. Addition of hydrotropes can disrupt the liquid crystalline phases but use of many hydrotropes often results in a solution that is still highly viscous.

WO 2005/048707 describes the use of a particular water soluble solvent to act as anti-gel forming and anti-caking agent for aqueous suspension concentrate compositions comprising polyoxyalkylene alkyl ethers. The anticaking agents are described as glycol based aqueous solvents such as ethylene glycol, diethylene glycol, dipropylene glycol and propylene glycol, with dipropylene glycol being preferred. However, we have found that use of such glycol solvents can result in a solution that is still highly viscous.

For agrochemical concentrates comprising adjuvants that exhibit liquid crystalline behaviour in water it can be important to reduce the viscosity of the agrochemical concentrate in order to provide good pourability, good rinsability from the container and/or for ease of dilution into water for spray application.

It has now surprisingly been found that aryl sulphonates can disrupt these liquid crystalline phases, leading to a liquid phase of a much lower viscosity.

Accordingly, in a first aspect the invention provides a method of reducing the viscosity of an aqueous agrochemical concentrate as claimed in claim 1.

The aryl sulphonate as claimed in claim 1 may be considered as viscosity reducing agents, e.g. they may disrupt liquid crystalline phases of the adjuvant, thereby reducing the viscosity of the concentrate. Preferably, such viscosity reducing agents are capable of maintaining the adjuvant in the liquid phase in water, e.g. the viscosity reducing agent is capable of preventing the adjuvant from adopting liquid crystalline phases when mixed with water. The liquid crystalline phases may be considered to be gel phases. For example, at particular concentrations of adjuvant, usually high concentrations, the presence of the viscosity reducing agent will maintain the adjuvant in the liquid phase whereas in the absence of the viscosity reducing agent the adjuvant will be a gel, e.g. liquid crystalline gel. The aryl sulphonate, aliphatic mono alcohol, aliphatic polyol or aryl alcohol are highly effective at reducing the viscosity of the liquid phase.

In one embodiment the invention provides a method of reducing the viscosity of an aqueous agrochemical concentrate comprising an adjuvant selected from an alkoxylated aliphatic acid, an alkoxylated aliphatic alcohol, an alkoxylated aliphatic amide and an alkoxylated aliphatic amine comprising including an aryl sulphonate as claimed in claim 1 in the aqueous agrochemical concentrate, wherein the concentration of adjuvant in the aqueous agrochemical concentrate is at least 50 g/l, and wherein the aqueous agrochemical concentrate comprises an agrochemical active ingredient.

In a further aspect, the invention provides an aqueous agrochemical concentrate as claimed in claim 2

In one embodiment, the invention provides an aqueous agrochemical concentrate comprising
a) an adjuvant selected from an alkoxylated aliphatic acid, an alkoxylated aliphatic alcohol, an alkoxylated aliphatic amide and an alkoxylated aliphatic amine; wherein the concentration of adjuvant in the aqueous agrochemical concentrate is at least 50 g/l;
b) an aryl sulphonate as described above; and
c) an agrochemical active ingredient.

Sometimes a high adjuvant concentration is desirable in order to increase the efficacy of the agrochemical active ingredient, or a high loaded formulation is more convenient for the end-user. For example, the adjuvant may be present in the aqueous agrochemical concentrate at at least 100g/l, at least 180g/l, or at least 230g/l. For example, the adjuvant may be - 50 - 800 g/l of the aqueous agrochemical concentrate, e.g. 100 - 500 g/l, e.g. 150 - 400 g/l.

The adjuvant may be present in the aqueous agrochemical concentrate at a concentration such that it exhibits liquid crystalline behaviour in the absence of the viscosity reducing agent, e.g. at 5°C.

The adjuvant may be an alkoxylated aliphatic acid, alkoxylated aliphatic alcohol, alkoxylated aliphatic amide or alkoxylated aliphatic amine, which aliphatic acid, aliphatic alcohol, aliphatic amide or aliphatic amine has a C₈-C₂₀ alkyl or C₈-C₂₀ alkenyl group. For example, the adjuvant may have the formula I:

R¹-(CO)ₚ-Z-[-R²O-]_{q}-R³ (I)

wherein
Z is O, NH, or N(-[-R²O-]_{q}-R³ providing that Z is O or NH when p is 1;
R¹ is C₈-C₂₀ alkyl or C₈-C₂₀ alkenyl;
each R² is independently C₂-C₄ alkyl;
R³ is hydrogen or C₁-C₈ alkyl; p is 0 or 1; and
q is 2 to 40.

Preferably Z is O. Preferably, R³ is C₁-C₈ alkyl, more preferably butyl. We have found that "end capping" the adjuvant with butyl is advantageous since a lower level of viscosity can be achieved with the same amount of viscosity reducing agent, compared to the corresponding uncapped adjuvant. Without being bound by theory, one explanation for this result could be that butyl "end capping" the adjuvant disrupts the packing of the adjuvant molecules in the liquid crystalline phase or the packing of the adjuvant molecules with the viscosity reducing agent. A "capped adjuvant" is one where R³ is not H.

More preferably, the adjuvant is one wherein: Z is O, R¹ is C₈-C₂₀ alkyl or C₈-C₂₀ alkenyl; R² is ethyl; R³ is C₁-C₈ alkyl; p is 0; and q is 2 to 40.

More preferably, the adjuvant is one wherein: Z is O, R¹ is C₁₆-C₂₀ alkyl or C₁₆-C₂₀ alkenyl; R² is ethyl; R³ is butyl; p is 0; and q is 5 to 30.

Usually the adjuvant in the aqueous agrochemical concentrate will be a blend of the molecules, e.g. in which Z, R¹, R², R³, q and p may have different values. For example, at least 50, 60, 70, 80, 90, or even 100% of the adjuvant molecules in the concentrate may be molecules according to formula I. For example, at least 50, 60, 70, 80, 90, or even 100% of the adjuvant molecules may be molecules in which R³ is C₁-C₈ alkyl. In particular, there will usually be a distribution of alkylene oxide chain lengths. Preferably the average value of q is 10 to 25, more preferably 18 to 22, even more preferably about 20. The term "average" refers to the mode average. At least 50, 60, 70, 80, 90, or even 100% of the adjuvant molecules in the concentrate may be molecules in which: Z is O, R¹ is C₁₆-C₂₀ alkyl or C₁₆-C₂₀ alkenyl; R² is ethyl; R³ is butyl; p is 0; and q is an average of 18-22.

Adjuvants of the present invention may be prepared by conventional techniques, e.g. as described in WO 03/022048.

In one embodiment the viscosity reducing agent is an aryl sulphonate. The aryl sulphonate is a compound of formula II:

A-SO₃⁻ (II)

wherein A is phenyl optionally substituted by one or more groups independently selected from C₁-C₈ alkyl, C₁-C₈ haloalkyl, hydroxy and halogen. Preferably, A is phenyl optionally substituted by one to three groups independently selected from C₁-C₈ alkyl, C₁-C₈ haloalkyl, hydroxy and halogen. More preferably, A is phenyl optionally substituted by one to three C₁-C₈ alkyl, more preferably optionally substituted by one or two C₁-C₄ alkyl.

Examples of particular aryl sulphonates for use as viscosity reducing agents are toluene sulphonate, xylene sulphonate and cumene sulphonate:

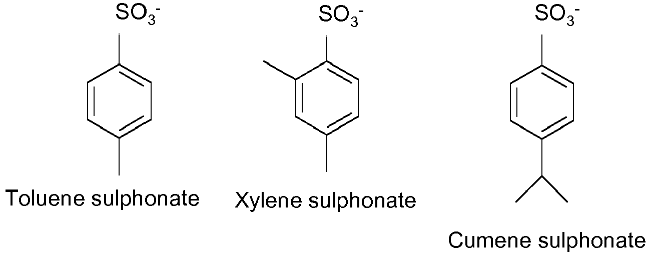

Most preferred is cumene sulphonate, e.g. ammonium cumene sulphonate.

Where possible the viscosity reducing agent may be provided in salt form or unprotonated form. Suitable salts will be apparent to the person skilled in the art, e.g. alkali metal salts, e.g. sodium and potassium salts, and ammonium salts. The viscosity reducing agent could also be added to the formulation in the acidic form, forming the salt in-situ e.g. with a basic surfactant or a basic active ingredient.

The term "optionally substituted" as used herein means substituted or not substituted. Alkyl and alkenyl groups as defined herein may be straight chains or branched chains.

The aqueous agrochemical concentrate is preferably a suspension concentrate (SC) formulation, e.g. an aqueous suspension of finely divided insoluble solid particles of the agrochemical active ingredient. SC formulations may be prepared by ball or bead milling a solid agrochemical active ingredient in a suitable medium to produce a fine particle suspension of the agrochemical active ingredient. The particle size is typically from 0.2-15 microns, for example from 0.5 to 5 microns median diameter. The agrochemical active ingredient may be combined with other formulation ingredients and added to water, or it may be added to water already containing other formulation ingredients. The order of addition of ingredients to the aqueous agrochemical concentrate is generally not critical, although it is preferable to add the viscosity reducing agent into the aqueous phase (optionally containing the active ingredient) before the addition of the adjuvant in order to speed up dissolution of the adjuvant.

The agrochemical composition may contain other ingredients found in commercial agrochemical concentrate formulations, e.g. surfactants, dispersants, polymers, wetting agents, other adjuvants stabilizers, pH modifiers, anti-freeze agents, suspending agents, emulsifiers, antifoam agents, pH stabilising agents, preservatives and the like.

The agrochemical active ingredient may be any agrochemical active ingredient, including pesticides, plant growth regulators, safeners, etc.. A pesticide is for example a herbicide, fungicide or insecticide.

As examples of herbicides suitable for formulation as a concentrate there may be mentioned mesotrione, fomesafen, tralkoxydim, napropamide, amitraz, propanil, pyrimethanil, dicloran, tecnazene, toclofos methyl, flamprop M, 2,4-D, MCPA, mecoprop, clodinafop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyclodim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazin, ametryn, prometryn, terbuthylazine, terbutryn, sulcotrione, isoproturon, linuron, fenuron, chlorotoluron and metoxuron.

As examples of fungicides suitable for formulation as a concentrate, in addition to those mentioned elsewhere, there may be mentioned azoxystrobin, trifloxystrobin, kresoxim methyl, famoxadone, metominostrobin and picoxystrobin, cyprodanil, carbendazim, thiabendazole, dimethomorph, vinclozolin, iprodione, dithiocarbamate, imazalil, prochloraz, fluquinconazole, epoxiconazole, flutriafol, azaconazole, bitertanol, bromuconazole, cyproconazole, difenoconazole, hexaconazole, paclobutrazole, propiconazole, tebuconazole, triadimefon, triticonazole, fenpropimorph, tridemorph, fenpropidin, mancozeb, metiram, chlorothalonil, thiram, ziram, captafol, captan, folpet, fluazinam, flutolanil, carboxin, metalaxyl, bupirimate, ethirimol, dimoxystrobin, fluoxastrobin, orysastrobin, metominostrobin and prothioconazole.

As examples of insecticides suitable for formulation as a concentrate there may be mentioned thiamethoxam, imidacloprid, acetamiprid, clothianidin, dinotefuran, nitenpyram, fipronil, abamectin, emamectin, bendiocarb, carbaryl, fenoxycarb, isoprocarb, pirimicarb, propoxur, xylylcarb, asulam, chlorpropham, endosulfan, heptachlor, tebufenozide, bensultap, diethofencarb, pirimiphos methyl, aldicarb, methyl, cyprmethrin, bioallethrin, deltamethrin, lambda cyhalothrin, cyhalothrin, cyfluthrin, fenvalerate, imiprothrin, permethrin, halfenprox and tefluthrin.

In one embodiment the agrochemical active ingredient is fungicide from the class of succinate dehydrogenase inhibitors (SDHI). The class of fungicides known as succinate dehydrogenase inhibitors is an art-recognised class with a mode of action that targets the enzyme succinate dehydrogenase (SDH, so-called complex II in the mitochondrial respiration chain), which is a functional part of the tricarboxylic cycle and linked to the mitochondrial electron transport chain. SDH consists of four subunits (A, B, C and D) and it is understood, without being bound by theory, that the binding site of ubiquinone (and of SDHIs) is formed by the subunits B, C and D. SDHI fungicides have been grouped under FRAC (Fungicide Resistance Action Committee) code number 7. See www.frac.info.

The SDHI class of fungicides includes phenyl benzamides, e.g. benodanil, flutolanil and mepronil; pyridinyl-ethyl-benzamides, e.g. fluopyram, furan-carboxamides, e.g. fenfuram, oxathin-carboxamides, e.g. carobxin oxycarboxin; thiazole-carboxamides, e.g. thifluzamide; pyrazole carboxamides, e.g. bixafen, furametpyr, isopyrazam, penflufen, penthiopyrad and sedaxane; and pyridine carboxamides, e.g. boscalid.

Preferably the SDHI fungicide is a compound of formula VII 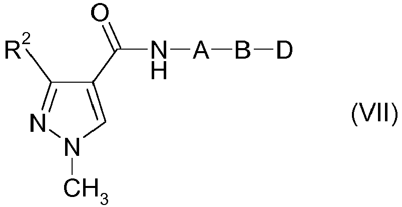 wherein R² is CF₃, CF₂H or CFH₂,
A is thienyl, phenyl, or ethylene each optionally substituted by one to three groups independently selected from halogen, methyl and methoxy,
B is a direct bond, cyclopropylene, an annelated bicyclo[2.2.1]heptane- or bicyclo[2.2.1]heptene ring, and
D is hydrogen, halogen, C₁-C₆ alkyl, C₁-C₆ haloalkyl, C₁-C₆ alkoxy, C₁-C₆ haloalkoxy, C₃-C₆ cycloalkyl, C₁-C₆ alkylidene, C₁-C₆ haloalkylidene, phenyl or phenyl optionally substituted by one to three substituents independently selected from halogen and trihalomethylthio.

The compound of formula VII is preferably a compound of formula VIII (Isopyrazam), a compound of formula IX (Sedaxane), a compound of formula X, a compound of formula XI (Penthiopyrad), a compound of formula XII (Bixafen), a compound of formula XIII (Fluxapyroxad), a compound of formula XIV, or a compound of formula XV.

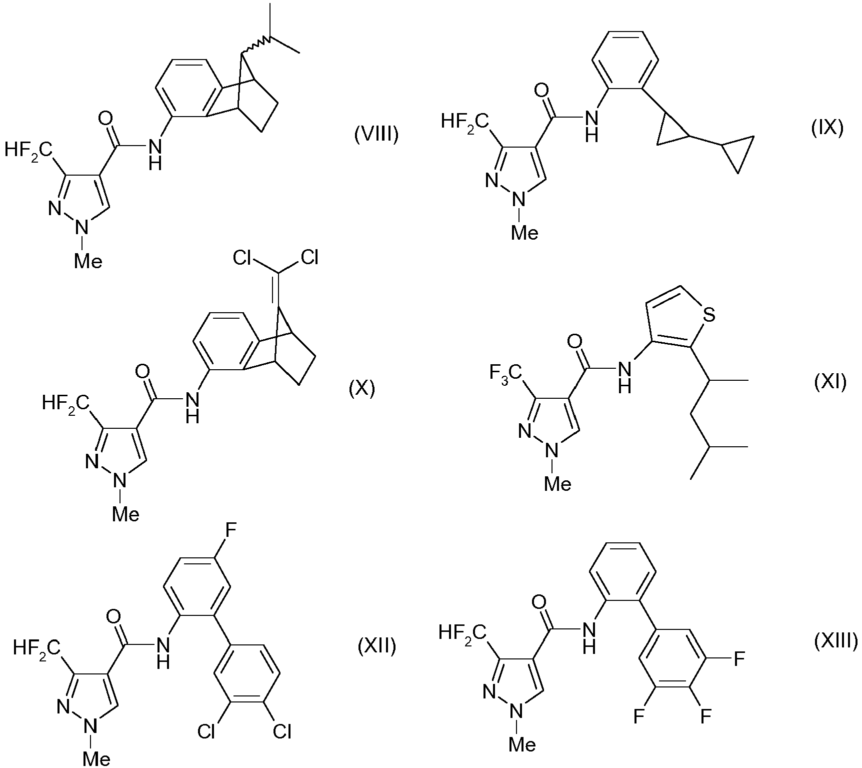

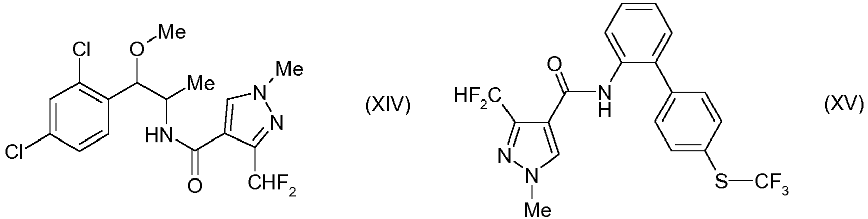

Isopyrazam, Sedaxane, Penthiopyrad, Fluxapyroxad and Bixafen are known fungicides. The compound of formula X is known, e.g. from WO 2007/048556, the compound of formula XIV is known e.g. from WO 2010/000612, the compound of formula XV is known e.g. from WO 2008/053044. The compound of formula VII is preferably Isopyrazam.

When the agrochemical active ingredient is an SDHI fungicide the viscosity reducing agent is preferably an aryl sulphonate, e.g. as described above. We have found that use of these viscosity reducing agents in combination with Isopyrazam reduces crystal growth in the aqueous agrochemical concentrate compared to concentrates using other viscosity reducing agents.

The aqueous agrochemical concentrate comprises the agricultural active ingredient in an amount to allow application of the agrochemical active ingredient at an effective rate. The "effective rate" can be experimentally determined and depends on the type of agrochemical active ingredient used. The concentration of the active ingredient in the concentrate could be also designed for ease of dilution by the end-user, e.g. to allow application at the desired number of litres of product per hectare. The concentration of the active ingredient in the concentrate could also be designed to reduce packaging and transportation costs. For example, the agrochemical active ingredient may be up to 700 g/l, e.g. 10-500 g/l, e.g. 50-300 g/l.

The aqueous agrochemical concentrate comprises an effective amount of the viscosity reducing agent, e.g. a concentration such that the viscosity of the aqueous agrochemical concentrate comprising the adjuvant is reduced compared to the absence of the agent. An effective amount of the viscosity reducing agent may be experimentally determined.

For example, when the viscosity reducing agent is an aryl sulphonate, it may be present in the aqueous agrochemical concentrate at at least 1 g/l, at least 5 g/l, at least 10 g/l, at least 20 g/l, at least 30 g/l, at least 50g/l, at least 100 g/l. The aryl sulphonate may be present in the range from 1-500 g/l, from 10 - 400 g/l, from 10-200 g/l, from 10-150 g/l.

When the aqueous agrochemical concentrate comprises a suspending agent it will contain an effective amount of the suspending agent. This may be experimentally determined.

The proportion of adjuvant relative to active ingredient can readily be selected by one skilled in the art to meet the intended utility. Typically the w/w ratio of adjuvant to active ingredient will range from 1: 50 and 200: 1 and preferably from 1: 5 to 20: 1.

The aqueous agrochemical concentrates of the invention may contain more than one type of adjuvant, more than one type of viscosity reducing agent, and/or more than one type of agrochemical active ingredient. In particular, the aqueous agrochemical concentrate may include more than one viscosity reducing agent, e.g. it may contain an aryl sulphonate and an alcohol, in particular an aryl sulphonate and an aliphatic alcohol, e.g. an aryl sulphonate and an aliphatic mono alcohol. A preferred combination is cumene sulphonate and 2-ethylhexanol.

The aqueous agrochemical concentrate may be various suitable formulation types, e.g. a suspension concentrate, a mixture of a suspension concentrate and soluble liquid, a mixture of a suspension concentrate and capsule suspension. Preferably, the aqueous agrochemical concentrate is a suspension concentrate formulation.

In a further aspect, the invention provides use as claimed in claim 6.

Preferably, the adjuvant is one as defined above. Preferably, the agrochemical active ingredient is a fungicide, more preferably a fungicide from the SDHI class of fungicides, even more preferably Isopyrazam.

In a further aspect, the invention provides a method comprising diluting the aqueous agrochemical concentrate in a spray tank.

In a further aspect the invention provides a method of controlling or preventing infestation of plants by phytopathogenic microorganisms by application of an aqueous agrochemical composition as claimed in claim 7.

Preferably the adjuvant is one as defined above. Preferably, the agrochemical active ingredient is a fungicide, more preferably a fungicide from the SDHI class of fungicides, even more preferably Isopyrazam.

Anti-settling agents are added to formulations to prevent the separation of components on long-term storage. Such anti-settling/structuring agents typically increase the viscosity of the formulation. However, as the formulation often has to be poured by the end user it is desirable for the stabilising structure to be easily broken by shear. In a suspension concentrate formulation the anti-settling agent is usually a swelling clay such as bentonite (sodium montmorillonite) which may be mixed with a water-soluble polymers to achieve synergistic rheological effects. The water-soluble polymer is usually a cellulose derivative or polysaccaharide such as Xanthan gum (Chemistry and Technology of Agrochemical Formulations, DA Knowles, Kluwer Academic Publishers 1998). However, we have found that commonly used suspending agents such as Bentopharm, Kelzan, Aerosil 200, Bentone SD-3, Bentone 1000, Jaguar HP120, Hydroxy propyl cellulose, are ineffective at high adjuvant concentration.

The present invention will now be described by way of the following non-limiting Examples. Those skilled in the art will promptly recognize appropriate variations from the procedures both as to reactants and as to reaction conditions and techniques.

### Examples

The composition of products used in the Examples was as follows:
Eltesol AC60 contains ammonium cumene sulphonate, 60%w/w ("Eltesol" is a trade mark).
Eltesol ST90 contains sodium toluene sulphonate 90%w/w.
Dowfax 2A1 and Dowfax 3B2 contain alkyl substituted diphenyl oxide disulphonate surfactants (in Dow trade literature described as having hydrotropic and surfactant properties in one molecule) ("Dowfax" is a trade mark).
Dowfax 2A1 contains a branched C12 diphenyl oxide disulphonate, sodium salt, 45%w/w. Dowfax 3B2 contains a linear C10 diphenyl oxide disulphonate, sodium salt, 45%w/w. Berol AG 6202 contains 2-ethylhexyl polyglucoside, 65%w/w ("Berol" is a trade mark). Berol AG 6206 contains hexyl polyglucoside, 75%w/w.
MeadWestvaco Diacid H-240 from MeadWestvaco contains the compound: 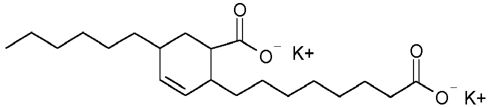 ("MeadWestvaco" is a trade mark).
MeadWestvaco Diacid H-240 contains a C21 dibasic fatty acid, potassium salt, 40-45%w/w. MeadWestvaco H240 is described as containing a hydrotrope in MeadWestvaco trade literature.
Rhodopol 23 contains standard grade xantham gum (antisettling agent) ("Rhodopol" is a trade mark).
Atlox 4913 is polymethyl methacrylate-polyethylene glycol graft copolymer (dispersant) ("Atlox" is a trade mark).
Soprophor 4D384 is Tristyrylphenol-16 EO, ammonium sulphate (dispersant) ("Soprophor" is a trade mark).
Aerosol OTB is 85%w/w sodium dioctyl sulfosuccinate, 15%w/w sodium benzoate (wetter). Jaguar HP120 contains hydroxypropyl guar gum (anti-settling agent) ("Jaguar" is a trade mark).
Amistar BIW is a commercial product containing azoxystrobin ("Amistar" is a trade mark).

The concentrations of hydrotropes quoted throughout the examples are the actual concentrations of the hydrotropes used, they are not the use concentrations of the products as supplied. The actual concentration quoted in the example can be converted into a product concentration using the concentration listed above for each of the hydrotropes.

### Example 1

An oleyl ethoxylate (20 ethoxylate units) butyl end capped adjuvant and various hydrotropes were added to water, mixed by rolling and then the solutions were equilibrated in an oven at 40°C for a few days. The adjuvant was added at 40%w/v and the hydrotropes were added at the concentrations quoted in Table 1. The viscosity of the liquid solutions was measured using a Bohlin Gemini rheometer fitted with a C14 concentric cylinder geometry in controlled strain rate mode. The viscosity at a shear rate of 100s⁻¹ was measured over a temperature range from 5°C to 40°C using a temperature increase of 1°C/minute.

The results at 5°C are shown in Table 1. The 40%w/v oleyl ethoxylate (20 ethoxylate units) butyl end capped adjuvant solution without hydrotrope forms a highly viscous liquid crystalline gel at 5°C. This sample was too viscous to determine an accurate measure of the viscosity within the time-frame of the experiment.

**Table 1**

| **Hydrotrope %w**/**v** | **Viscosity (Pas)** |
|---|---|
| None | Highly viscous gel |
| 20% Dowfax 2A1 | 16.9 |
| 20% Dowfax 3B2 | 10.8 |
| 20% MeadWestvaco H-240 | 4.44 |
| 20% Berol AG 6202 | 2.64 |
| 20% Berol AG 6206 | 2.51 |
| 20% Eltesol ST90 | 1.97 |
| 20% Eltesol AC60 | 0.93 |
| 10% Na salicylate | 1.92 |
| 10% Eltesol AC60 | 1.37 |

All of the hydrotropes listed in Table 1 prevented the formation of the highly viscous liquid crystalline gel at 5°C.

These results show that aryl sulphonates and sodium salicylate are highly effective at reducing the viscosity compared to other types of molecules commonly used as hydrotropes.

### Example 2

Isopyrazam suspension concentrate (SC) formulations were prepared with the compositions shown in Table 2. The Isopyrazam was bead milled in water containing the dispersing agents and the wetting agent to produce a concentrated fine particle suspension. The other formulation ingredients were added after the milling stage and incorporated with a high shear Silverson mixer. The dispersing and wetting agents used in all these compositions were a combination of Atlox 4913, Soprophor 4D384 and Aerosol OTB in a ratio of 18:6:1.

**Table 2**

| | **Composition 1 (g/l)** | **Composition 2 (g/l)** | **Composition 3 (g/l)** | **Composition 4 (g/l)** | **Composition 5 (g/l)** |
|---|---|---|---|---|---|
| Isopyrazam | 125 | 125 | 125 | 125 | 125 |
| Dispersing agents | 15 | 15 | 15 | 15 | 15 |
| Wetting agent | 0.63 | 0.63 | 0.63 | 0.63 | 0.63 |
| Oleyl ethoxylate 20EO butyl end capped | 300 | 300 | 300 | 300 | 300 |
| Eltesol AC60 | - | 50 | 60 | 90 | 150 |
| Attapulgite clay | 11 | 11 | 11 | 11 | 11 |
| Rhodopol 23 | 3 | 3 | 3 | 3 | 3 |
| Antifoam | 0.25 | 0.25 | 0.25 | 0.25 | 0.25 |
| Preservative | 1.625 | 1.625 | 1.625 | 1.625 | 1.625 |

Viscosity data for the compositions 1-5 is shown in Table 3. The viscosity data was measured using Anton-Paar MCR 301 and 501 Rheometers using a CC17 cup and bob geometry. The samples were pre-sheared and left for 30 minutes before the viscosity was measured at 5 °C. Composition 1 was too viscous to determine an accurate measure of the viscosity within the time-frame of the experiment.

**Table 3**

| | **Viscosity at 9.58s⁻¹, 5°C (mPas)** | **Viscosity at 500s⁻¹**, **5°C (mPas)** |
|---|---|---|
| Composition 1 | Highly viscous gel | Highly viscous gel |
| Composition 2 | 13546 | 1638 |
| Composition 3 | 1231 | 1116 |
| Composition 4 | 770 | 740 |
| Composition 5 | 730 | 701 |

It can be seen that increasing the concentration of Eltesol AC60 in the Isopyrazam compositions breaks up the highly viscous liquid crystalline gel and leads to a decrease in the viscosity of the suspension concentrate formulation at 5°C.

### Example 3

An oleyl ethoxylate (10 ethoxylate units) butyl end capped adjuvant and the aryl sulphonate Eltesol AC60 were added to water, mixed by rolling, and then the solutions were equilibrated in an oven at 40°C for a few days. The adjuvant was added at 40%w/v and the Eltesol AC60 was added at the concentrations quoted in Table 4. The viscosity of the solutions containing the oleyl ethoxylate (10 ethoxylate units) butyl end capped adjuvant and the Eltesol AC60 was measured using a Bohlin Gemini rheometer fitted with a C14 concentric cylinder geometry in controlled strain rate mode. The viscosity at a shear rate of 100s⁻¹ was measured over a temperature range from 5°C to 40°C using a temperature increase of 1°C/minute.

The results at 5°C are shown in Table 4. The 40%w/v oleyl ethoxylate (10 ethoxylate units) butyl end capped adjuvant solution with no Eltesol AC60 present forms a highly viscous gel at 5°C. This sample was too viscous to determine an accurate measure of the viscosity within the timeframe of the experiment. Results are shown in Table 4.

**Table 4**

| **Viscosity reducing agent %w/v** | **Viscosity (Pas)** |
|---|---|
| None | Highly viscous gel |
| 10% Eltesol AC60 | 0.87 |
| 15% Eltesol AC60 | 0.84 |
| 20% Eltesol AC60 | 0.60 |

These results show that aryl sulphonates are highly effective at reducing viscosity.

### Example 4

An oleyl ethoxylate (10 ethoxylate units) uncapped adjuvant and the aryl sulphonate Eltesol AC60 were added to water, mixed by rolling and then the solutions were equilibrated in an oven at 40°C for a few days. The adjuvant was added at 40%w/v and the Eltesol AC60 was added at the concentrations quoted in Table 5. The viscosity of the solution containing the oleyl ethoxylate (10 ethoxylate units) uncapped adjuvant and 20%w/v Eltesol AC60 was measured using a Bohlin Gemini rheometer fitted with a C14 concentric cylinder geometry in controlled strain rate mode. The viscosity at a shear rate of 100s⁻¹ was measured over a temperature range from 5°C to 40°C using a temperature increase of 1°C/minute.

The results at 5°C are shown in Table 5. The 40%w/v oleyl ethoxylate (10 ethoxylate units) uncapped adjuvant solutions with no Eltesol AC60 present and with 10%w/v Eltesol AC60 form highly viscous gels at 5°C. These samples were too viscous to determine an accurate measure of the viscosity within the timeframe of the experiment. Results are shown in Table 5.

**Table 5**

| **Viscosity reducing agent %w/v** | **Viscosity (Pas)** |
|---|---|
| None | Highly viscous gel |
| 10% Eltesol AC60 | Highly viscous gel |
| 20% Eltesol AC60 | 4.14 |

These results in Examples 3 and 4 show that when the adjuvants are butyl end capped a lower level of viscosity can be achieved with the same amount of aryl sulphonate, compared to the corresponding uncapped adjuvant.

### Example 5

An oleyl ethoxylate (20 ethoxylate units) butyl end capped adjuvant and the aliphatic mono alcohols in Table 6 were added to water, mixed by rolling, and then the solutions were equilibrated in an oven at 40°C for a few days. The adjuvant was added at 40%w/v and the aliphatic mono alcohols were added at the concentrations quoted in Table 6. The viscosity of the liquid solutions was measured using a Bohlin Gemini rheometer fitted with a C14 concentric cylinder geometry in controlled strain rate mode. The viscosity at a shear rate of 100s⁻¹ was measured over a temperature range from 5°C to 40°C using a temperature increase of 1°C/minute. The results at 5°C are shown in Table 6.

**Table 6**

| **Viscosity reducing agent %w/v** | **Viscosity (Pas)** |
|---|---|
| None | Highly viscous gel |
| 20% cyclohexanol | 0.19 |
| 10% cyclohexanol | 0.41 |
| 10% 2-ethylhexanol | 0.8 |

The 40%w/v oleyl ethoxylate (20 ethoxylate units) butyl end capped adjuvant solution without hydrotrope forms a highly viscous gel at 5°C. This sample was too viscous to determine an accurate measure of the viscosity within the timeframe of the experiment.

These results show that aliphatic mono alcohols are highly effective at reducing the viscosity.

### Example 6

An oleyl ethoxylate (20 ethoxylate units) butyl end capped adjuvant and the diols listed in Table 8 were added to water, mixed by rolling, and then the solutions were equilibrated in an oven at 40°C for one day. The adjuvant was added at 40%w/v and the diols were added at 10%w/v. The viscosity of the solutions was measured using an Anton-Paar MCR501 rheometer using a CC17 cup and bob geometry. The viscosity at a shear rate of 100s⁻¹ was measured at 5°C. Results are shown in Table 7.

The 40%w/v oleyl ethoxylate (20 ethoxylate units) butyl end capped adjuvant solution in water forms a highly viscous liquid crystalline gel at 5°C. The solution containing 40%w/v oleyl ethoxylate (20 ethoxylate units) butyl end capped adjuvant in combination with 10%w/v propylene glycol also formed a highly viscous liquid crystalline gel at 5°C. Both of these samples were too viscous to determine an accurate measure of the viscosity within the timeframe of the experiment.

**Table 7**

| **Aliphatic diols w**/**v%** | **Viscosity (Pas)** |
|---|---|
| None | Highly viscous gel |
| 10%w/v propylene glycol | Highly viscous gel |
| 10%w/v 2-ethyl 1,3 hexanediol | 0.46 |
| 10%w/v 2-methyl 2,4 pentanediol | 1.71 |
| 10%w/v 1,2 pentanediol | 1.30 |

These results show that aliphatic diols are highly effective at reducing the viscosity. In comparison, addition of 10% w/v propylene glycol does not prevent formation of the highly viscous liquid crystalline phase.

### Example 7

Isopyrazam suspension concentrate (SC) formulations were prepared with the compositions shown in Table 8. The Isopyrazam was bead milled in water containing the dispersing agents and the wetting agent to produce a concentrated fine particle suspension. The other formulation ingredients were added after the milling stage and incorporated with a high shear Silverson mixer. The dispersing and wetting agents used in all these compositions were a combination of Atlox 4913, Soprophor 4D384 and Aerosol OTB in a ratio of 18:6:1.

**Table 8**

| | **Composition (g/l)** |
|---|---|
| Isopyrazam | 125 |
| Dispersing agents | 15 |
| Wetting agent | 0.63 |
| Oleyl ethoxylate (20 ethoxylate units, butyl end capped) | 250 |
| Eltesol AC60 | 150 |
| Anti-settling agent | Varied as detailed in Table 2 |
| Rhodopol 23 | 3 |
| Antifoam | 0.25 |
| Preservative | 1.625 |

After manufacture 20 ml of formulation was stored in a 28 ml glass vial at 25°C and the physical stability with time visually inspected. The % height of clear layer compared to the total sample height in a 28 ml vial was measured. Table 9 demonstrates clear differences in physical stability with variation in anti-settling agent. Water was used as the make-up component when volumes of anti-settling systems were varied.

**Table 9**

| **Antisettling agent** | **Separation after 4 weeks at 25°C** | **Separation after 8 weeks at 25°C** |
|---|---|---|
| 50 g/L Bentopharm, 3 g/l Kelzan | 10 % clear layer | 33 % clear layer |
| Attapulgite 11 g/l | trace | trace |
| Attapulgite 15 g/l | trace | trace |

As shown in Table 9 visual inspection indicated that formations stabilised using the common anti-settling sytem of Bentopharm/Kelzan were unstable whereas formulation stabilised using Attapulgite were satisfactorily stable.

### Example 8

Formulations were prepared using the same method as outlined in Example 7. 90 g/l of a second active ingredient was added to the Isopyrazam and bead milled to achieve a dispersion of fine particulates. In this example the level of Oleyl ethoxylate 20EO butyl end capped was reduced to 235 g/l. A range of anti-settling systems was incorporated into this mixture and the physical stability measured with time at a standard temperature. The % of clear layer compared to the total sample height in a 28 ml vial was measured.

**Table 10**

| **Anti-settling agent** | **Separation on storage at 25°C** | **Separation on storage at 40°C** | **Storage period** |
|---|---|---|---|
| Attapulgite (10 g/l) | Trace | Trace | 4 weeks |
| Bentone SD-3 (10 g/L) | 13% | 19% | 3 weeks |
| Bentone 34 (10 g/l) | 18% | 25% | 3 weeks |
| Bentone 1000 (10 g/L) | 13% | 18% | 3 weeks |
| Kelzan (2.8 g/l) | 4% | 38% | 4 weeks |
| Hydroxypropyl cellulose (2.5 g/l) | 33% | 37% | 4 weeks |
| Jaguar HP120 | 31% | 36% | 4 weeks |

| | | | |
|---|---|---|---|
| | | | |

Table 10 shows the surprising results that only attapulgite prevented significant separation of the formulation over 3 or more weeks stationary storage.

### Example 9

Samples prepared as described in Example 7 using a range of anti-settling agents. Viscosity data for the compositions 1-5 is shown in Table 11. The viscosity data was measured using Anton-Paar MCR 301 and 501 Rheometers using a CC17 cup and bob geometry. The samples were pre-sheared and left for 30 minutes before the viscosity was measured at 25 °C.

**Table 11**

| **Anti-settling agent** | **Shear Rate 1 s⁻¹** | **Shear rate 10 s⁻¹** | **Shear rate 500 s⁻¹** |
|---|---|---|---|
| Commerical standard (Amistar BIW) | 3638 | 752 | 146 |
| Attapulgite (11 g/l) | 3468 | 853 | 306 |
| Kelzan (3g/l) Aerosil 200 (15g/l) | 939 | 551 | 338 |
| Kelzan (3g/l) Aerosil 200 (5g/l) | 326 | 266 | 230 |
| Bentopharm (60 g/l) | 482 | 337 | 279 |
| Bentopharm (25 g/l) | 341 | 263 | 233 |

Table 11 shows only Attapulgite (11 g/l) gives the highly shear thinning rheological profile similar to commercial standard. A shear thinning rhelogical profile is commonly desirable to allow the formulation of both physical stable and pourable, in this particular example it is crucial due to the highly viscous nature of the mixture at low temperature yet highly mobile behaviour at high temperatures.

### Example 10

To make a commercially acceptable product it must be both physically stable and pourable. Pourability can be measured using CIPCA method MT148. As described by this method 500 ml of product was placed in a stopper measuring cylinder and allowed to stand undisturbed for 24 hours at the temperature indicated in the table below (Room temperature or 5°C). The contained is then emptied at an angle of 45° for 60 seconds and then inverted for 60 seconds. The percentage weight of the residue in the container with respect to the total mass of the original 500 ml is deemed the pourability value. A pourability value of below 5% is deemed acceptable for product registration.

Table 12 shows the results of a commercial standard and two formulations prepared using the method outlined in example 7.

**Table 12**

| **Clay level (g/l)** | **15** | **20** | **Amistar BIW (commercial standard)** |
|---|---|---|---|
| Pourability (%) (room temperature) | 3.9 | 4.3 | 4.6 |
| Pourabiliy 5°C | 4.6 | 4.6 | 4.5 |

Table 12 demonstrates that these products have acceptable pourability values even at low temperatures.

## Claims

1. A method of reducing the viscosity of an aqueous agrochemical concentrate comprising a) an adjuvant selected from an alkoxylated aliphatic acid, an alkoxylated aliphatic alcohol, an alkoxylated aliphatic amide and an alkoxylated aliphatic amine, wherein the concentration of adjuvant in the aqueous agrochemical concentrate is at least 50 g/l; the method comprising including in the aqueous agrochemical concentrate b) an aryl sulphonate which is a compound of formula II:
A-SO₃⁻ (II)
wherein A is phenyl optionally substituted by one or more groups independently selected from C₁-C₈ alkyl, C₁-C₈ haloalkyl, hydroxy and halogen; and
wherein the aqueous agrochemical concentrate comprises an agrochemical active ingredient.

2. An aqueous agrochemical concentrate comprising:
a) an adjuvant selected from an alkoxylated aliphatic acid, an alkoxylated aliphatic alcohol, an alkoxylated aliphatic amide and an alkoxylated aliphatic amine, wherein the concentration of adjuvant in the aqueous agrochemical concentrate is at least 50 g/l;
b) an aryl sulphonate which is a compound of formula II:
A-SO₃⁻ (II)
wherein A is phenyl optionally substituted by one or more groups independently selected from C₁-C₈ alkyl, C₁-C₈ haloalkyl, hydroxy and halogen; and
c) an agrochemical active ingredient.

3. A method or aqueous agrochemical concentrate according to claim 1 or claim 2, wherein A is phenyl substituted by one to three C₁-C₈ alkyl groups.

4. A method or aqueous agrochemical concentrate according to claim 1 or claim 2, wherein the aryl sulphonate is cumene sulphonate.

5. A method comprising diluting in a spray tank the aqueous agrochemical concentrate as defined in any one of claims 1 to 4.

6. Use of an aryl sulphonate which is a compound of formula II:
A-SO₃⁻ (II)
wherein A is phenyl optionally substituted by one or more groups independently selected from C₁-C₈ alkyl, C₁-C₈ haloalkyl, hydroxy and halogen;
for reducing the viscosity of an aqueous agrochemical concentrate comprising an adjuvant selected from an alkoxylated aliphatic acid, an alkoxylated aliphatic alcohol, an alkoxylated aliphatic amide and an alkoxylated aliphatic amine, and an agrochemical active ingredient, wherein the concentration of adjuvant in the aqueous agrochemical concentrate is at least 50g/l.

7. A method of controlling or preventing infestation of plants by phytopathogenic microorganisms by application of an aqueous agrochemical composition comprising:
a) an adjuvant selected from an alkoxylated aliphatic acid, an alkoxylated aliphatic alcohol, an alkoxylated aliphatic amide and an alkoxylated aliphatic amine;
b) an aryl sulphonate which is a compound of formula II:
A-SO₃⁻ (II)
wherein A is phenyl optionally substituted by one or more groups independently selected from C₁-C₈ alkyl, C₁-C₈ haloalkyl, hydroxy and halogen; and
c) an agrochemical active ingredient;
wherein the method comprises providing the agrochemical composition by diluting an aqueous agrochemical concentrate, wherein the concentration of adjuvant in the aqueous agrochemical concentrate is at least 50 g/l.

8. An aqueous agrochemical concentrate, method or use according to any one of claims 1 to 7, wherein the concentration of adjuvant in the concentrate is at least 100g/l, and preferably is at least 180g/l.

9. A method, use or aqueous agrochemical concentrate according to any one of claims 1 to 8, wherein the adjuvant is an alkoxylated aliphatic acid, an alkoxylated aliphatic alcohol, an alkoxylated aliphatic amide or alkoxylated aliphatic amine, which acid, alcohol, amide or amine has a C₈-C₂₀ alkyl or C₈-C₂₀ alkenyl group.

10. An aqueous agrochemical concentrate, method or use according to any one of claims 1 to 9, wherein the adjuvant comprises compounds of formula I:
R¹-(CO)ₚ-Z-[-R²O-]_{q}-R³ (I)
wherein
Z is O, NH, or N(-[-R²O-]_{q}-R³) providing that Z is O or NH when p is 1;
R¹ is C₈-C₂₀ alkyl or C₈-C₂₀ alkenyl;
each R² is independently C₂-C₄ alkyl;
R³ is hydrogen or C₁-C₈ alkyl;
p is 0 or 1; and
q is 2 to 40.

11. An aqueous agrochemical concentrate, method or use according to claim 10, wherein R³ is C₁-C₈ alkyl.

12. An aqueous agrochemical concentrate, method or use according to claim 10, wherein
Z is O;
R¹ is C₁₆-C₂₀ alkyl or C₁₆-C₂₀ alkenyl;
R² is ethyl;
R³ is butyl;
p is 0; and
q is an average of 18-22.

13. An aqueous agrochemical concentrate, method or use according to any one of claims 1 to 12, wherein the agrochemical active ingredient is a fungicide from the SDHI class of fungicides.

14. An aqueous agrochemical concentrate, method or use according to any one of claims 1 to 12, wherein the agrochemical active ingredient is Isopyrazam.

15. An aqueous agrochemical concentrate, method or use according to any one of claims 1 to 12, wherein the aqueous agrochemical concentrate is a suspension concentrate.

## Patentansprüche

1. Verfahren zum Verringern der Viskosität eines wässrigen agrochemischen Konzentrats, umfassend
a) einen Hilfsstoff ausgewählt aus einer alkoxylierten aliphatischen Säure, einem alkoxylierten aliphatischen Alkohol, einem alkoxylierten aliphatischen Amid und einem alkoxylierten aliphatischen Amin, wobei die Konzentration an Hilfsstoff in dem wässrigen agrochemischen Konzentrat wenigstens 50 g/l beträgt; wobei das Verfahren Einschließen von
b) einem Arylsulfonat, das eine Verbindung der Formel II ist, in das wässrige agrochemische Konzentrat umfasst:
A-SO₃⁻ (II)
wobei A Phenyl ist, gegebenenfalls substituiert mit einer oder mehreren Gruppen unabhängig ausgewählt aus C₁-C₈-Alkyl, C₁-C₈-Halogenalkyl, Hydroxy und Halogen; und
wobei das wässrige agrochemische Konzentrat einen agrochemischen Wirkstoff umfasst.

2. Wässriges agrochemisches Konzentrat, umfassend:
a) einen Hilfsstoff ausgewählt aus einer alkoxylierten aliphatischen Säure, einem alkoxylierten aliphatischen Alkohol, einem alkoxylierten aliphatischen Amid und einem alkoxylierten aliphatischen Amin, wobei die Konzentration an Hilfsstoff in dem wässrigen agrochemischen Konzentrat wenigstens 50 g/l beträgt;
b) ein Arylsulfonat, das eine Verbindung der Formel II ist:
A-SO₃⁻ (II)
wobei A Phenyl ist, gegebenenfalls substituiert mit einer oder mehreren Gruppen unabhängig ausgewählt aus C₁-C₈-Alkyl, C₁-C₈-Halogenalkyl, Hydroxy und Halogen; und
c) einen agrochemischen Wirkstoff.

3. Verfahren oder wässriges agrochemisches Konzentrat gemäß Anspruch 1 oder Anspruch 2, wobei A Phenyl, substituiert mit einer bis drei C₁-C₈-Alkylgruppen, ist.

4. Verfahren oder wässriges agrochemisches Konzentrat gemäß Anspruch 1 oder Anspruch 2, wobei das Arylsulfonat Cumensulfonat ist.

5. Verfahren umfassend Verdünnen des wässrigen agrochemischen Konzentrats gemäß einem der Ansprüche 1 bis 4 in einem Sprühtank.

6. Verwendung eines Arylsulfonats, das eine Verbindung der Formel II ist:
A-SO₃⁻ (II)
wobei A Phenyl ist, gegebenenfalls substituiert mit einer oder mehreren Gruppen unabhängig ausgewählt aus C₁-C₈-Alkyl, C₁-C₈-Halogenalkyl, Hydroxy und Halogen;
zum Verringern der Viskosität eines wässrigen agrochemischen Konzentrats, das einen Hilfsstoff ausgewählt aus einer alkoxylierten aliphatischen Säure, einem alkoxylierten aliphatischen Alkohol, einem alkoxylierten aliphatischen Amid und einem alkoxylierten aliphatischen Amin und einen agrochemischen Wirkstoff umfasst, wobei die Konzentration an Hilfsstoff in dem wässrigen agrochemischen Konzentrat wenigstens 50 g/l beträgt.

7. Verfahren zum Bekämpfen oder Verhindern von Befall von Pflanzen mit phytopathogenen Mikroorganismen durch Aufbringen einer wässrigen agrochemischen Zusammensetzung umfassend:
a) einen Hilfsstoff ausgewählt aus einer alkoxylierten aliphatischen Säure, einem alkoxylierten aliphatischen Alkohol, einem alkoxylierten aliphatischen Amid und einem alkoxylierten aliphatischen Amin;
b) ein Arylsulfonat, das eine Verbindung der Formel II ist:
A-SO₃⁻ (II)
wobei A Phenyl ist, gegebenenfalls substituiert mit einer oder mehreren Gruppen unabhängig ausgewählt aus C₁-C₈-Alkyl, C₁-C₈-Halogenalkyl, Hydroxy und Halogen; und
c) einen agrochemischen Wirkstoff;
wobei das Verfahren Bereitstellen der agrochemischen Zusammensetzung durch Verdünnen eines wässrigen agrochemischen Konzentrats umfasst, wobei die Konzentration an Hilfsstoff in dem wässrigen agrochemischen Konzentrat wenigstens 50 g/l beträgt.

8. Wässriges agrochemisches Konzentrat, Verfahren oder Verwendung gemäß einem der Ansprüche 1 bis 7, wobei die Konzentration an Hilfsstoff in dem Konzentrat wenigstens 100 g/l beträgt und vorzugsweise wenigstens 180 g/l beträgt.

9. Verfahren, Verwendung oder wässriges agrochemisches Konzentrat gemäß einem der Ansprüche 1 bis 8, wobei der Hilfsstoff eine alkoxylierte aliphatische Säure, ein alkoxylierter aliphatischer Alkohol, ein alkoxyliertes aliphatisches Amid oder ein alkoxyliertes aliphatisches Amin ist, wobei die Säure, der Alkohol, das Amid oder das Amin eine C₈-C₂₀-Alkyl- oder C₈-C₂₀-Alkenylgruppe aufweist.

10. Wässriges agrochemisches Konzentrat, Verfahren oder Verwendung gemäß einem der Ansprüche 1 bis 9, wobei der Hilfsstoff Verbindungen der Formel I umfasst:
R¹-(CO)ₚ-Z-[-R²O-]_{q}-R³ (I)
wobei
Z O, NH oder N(-[-R²O-]_{q}-R³) ist, vorausgesetzt, dass Z O oder NH ist, wenn p 1 ist;
R¹ C₈-C₂₀-Alkyl oder C₈-C₂₀-Alkenyl ist;
jedes R² unabhängig C₂-C₄-Alkyl ist;
R³ Wasserstoff oder C₁-C₈-Alkyl ist;
p 0 oder 1 ist; und
q 2 bis 40 ist.

11. Wässriges agrochemisches Konzentrat, Verfahren oder Verwendung gemäß Anspruch 10, wobei R³ C₁-C₈-Alkyl ist.

12. Wässriges agrochemisches Konzentrat, Verfahren oder Verwendung gemäß Anspruch 10, wobei
Z O ist;
R¹ C₁₆-C₂₀-Alkyl oder C₁₆-C₂₀-Alkenyl ist;
R² Ethyl ist;
R³ Butyl ist;
p 0 ist; und
q ein Mittelwert von 18-22 ist.

13. Wässriges agrochemisches Konzentrat, Verfahren oder Verwendung gemäß einem der Ansprüche 1 bis 12, wobei der agrochemische Wirkstoff ein Fungizid aus der SDHI-Klasse von Fungiziden ist.

14. Wässriges agrochemisches Konzentrat, Verfahren oder Verwendung gemäß einem der Ansprüche 1 bis 12, wobei der agrochemische Wirkstoff Isopyrazam ist.

15. Wässriges agrochemisches Konzentrat, Verfahren oder Verwendung gemäß einem der Ansprüche 1 bis 12, wobei das wässrige agrochemische Konzentrat ein Suspensionskonzentrat ist.

## Revendications

1. Méthode de réduction de la viscosité d'un concentré agrochimique aqueux comprenant a) un adjuvant sélectionné parmi un acide aliphatique alcoxylé, un alcool aliphatique alcoxylé, un amide aliphatique alcoxylé et une amine aliphatique alcoxylée, dans laquelle la concentration en adjuvant dans le concentré agrochimique aqueux est d'au moins 50 g/l ; la méthode comprenant l'inclusion dans le concentré agrochimique aqueux de b) un sulfonate d'aryle qui est un composé de formule II :
A-SO₃⁻ (II)
dans laquelle A est phényle éventuellement substitué par un ou plusieurs groupements choisis indépendamment parmi C₁-C₈alkyle, C₁-C₈halogénoalkyle, hydroxy et halogène ; et où le concentré agrochimique aqueux comprend un ingrédient actif agrochimique.

2. Concentré agrochimique aqueux comprenant :
a) un adjuvant sélectionné parmi un acide aliphatique alcoxylé, un alcool aliphatique alcoxylé, un amide aliphatique alcoxylé et une amine aliphatique alcoxylée, où la concentration en adjuvant dans le concentré agrochimique aqueux est d'au moins 50 g/l ;
b) un sulfonate d'aryle qui est un composé de formule II :
A-SO₃⁻ (II)
dans laquelle A est phényle éventuellement substitué par un ou plusieurs groupements choisis indépendamment parmi C₁-C₈alkyle, C₁-C₈halogénoalkyle, hydroxy et halogène ; et
c) un ingrédient actif agrochimique.

3. Méthode ou concentré agrochimique aqueux selon la revendication 1 ou la revendication 2, où A est phényle substitué par un à trois groupements C₁-C₈alkyle.

4. Méthode ou concentré agrochimique aqueux selon la revendication 1 ou la revendication 2, où le sulfonate d'aryle est le sulfonate de cumène.

5. Méthode comprenant la dilution dans une cuve de pulvérisation du concentré agrochimique aqueux tel que défini selon l'une quelconque des revendications 1 à 4.

6. Utilisation d'un sulfonate d'aryle qui est un composé de formule II :
A-SO₃⁻ (II)
dans laquelle A est phényle éventuellement substitué par un ou plusieurs groupements choisis indépendamment parmi C₁-C₈alkyle, C₁-C₈halogénoalkyle, hydroxy et halogène ; pour la réduction de la viscosité d'un concentré agrochimique aqueux comprenant un adjuvant sélectionné parmi un acide aliphatique alcoxylé, un alcool aliphatique alcoxylé, un amide aliphatique alcoxylé et une amine aliphatique alcoxylée, et un ingrédient actif agrochimique, où la concentration en adjuvant dans le concentré agrochimique aqueux est d'au moins 50 g/l.

7. Méthode de contrôle ou de prévention de l'infestation de plantes par des microorganismes phytopathogènes par l'application d'une composition agrochimique aqueuse comprenant :
a) un adjuvant sélectionné parmi un acide aliphatique alcoxylé, un alcool aliphatique alcoxylé, un amide aliphatique alcoxylé et une amine aliphatique alcoxylée ;
b) un sulfonate d'aryle qui est un composé de formule II :
A-SO₃⁻ (II)
dans laquelle A est phényle éventuellement substitué par un ou plusieurs groupements choisis indépendamment parmi C₁-C₈alkyle, C₁-C₈halogénoalkyle, hydroxy et halogène ; et
c) un ingrédient actif agrochimique ;
où la méthode comprend la fourniture de la composition agrochimique par dilution d'un concentré agrochimique aqueux, où la concentration en adjuvant dans le concentré agrochimique aqueux est d'au moins 50 g/l.

8. Concentré agrochimique aqueux, méthode ou utilisation selon l'une quelconque des revendications 1 à 7, où la concentration en adjuvant dans le concentré est d'au moins 100 g/l, et de préférence est d'au moins 180 g/l.

9. Méthode, utilisation ou concentré agrochimique aqueux selon l'une quelconque des revendications 1 à 8, où l'adjuvant est un acide aliphatique alcoxylé, un alcool aliphatique alcoxylé, un amide aliphatique alcoxylé ou une amine aliphatique alcoxylée, lequel ou laquelle acide, alcool, amide ou amine possède un groupement C₈-C₂₀alkyle ou C₈-C₂₀alcényle.

10. Concentré agrochimique aqueux, méthode ou utilisation selon l'une quelconque des revendications 1 à 9, où l'adjuvant comprend des composés de formule I :
R¹-(CO)ₚ-Z-[-R²O-]_{q}-R³ (I)
dans laquelle
Z est O, NH ou N(-[-R²O-]_{q}-R³) à condition que Z soit O ou NH quand p vaut 1 ;
R¹ est C₈-C₂₀alkyle ou C₈-C₂₀alcényle ;
chaque R² est, indépendamment, alkyle en C₂-C₄ ;
R³ est hydrogène ou C₁-C₈alkyle ;
p vaut 0 ou 1 ; et
q va de 2 à 40.

11. Concentré agrochimique aqueux, méthode ou utilisation selon la revendication 10, où R³ est C₁-C₈-alkyle.

12. Concentré agrochimique aqueux, méthode ou utilisation selon la revendication 10, où
Z est O ;
R¹ est C₁₆-C₂₀alkyle ou C₁₆-C₂₀alcényle ;
R² est éthyle ;
R³ est butyle ;
p vaut 0 ; et
q est une valeur moyenne de 18-22.

13. Concentré agrochimique aqueux, méthode ou utilisation selon l'une quelconque des revendications 1 à 12, où l'ingrédient actif agrochimique est un fongicide de la classe SDHI des fongicides.

14. Concentré agrochimique aqueux, méthode ou utilisation selon l'une quelconque des revendications 1 à 12, où l'ingrédient actif agrochimique est l'isopyrazam.

15. Concentré agrochimique aqueux, méthode ou utilisation selon l'une quelconque des revendications 1 à 12, où le concentré agrochimique aqueux est un concentré en suspension.
